# EUROPEAN PATENT APPLICATION

(11) **EP 1 547 847 A2**
(43) Date of publication of application: **29.06.2005**
(21) Application number: 04258054.8
(22) Date of filing: 22.12.2004
(51) Int. Cl.: B60K 31/00

(54) **Adaptive cruise control**

(30) Priority: 25.12.2003 JP 2003431259
(71) Applicant: FUJI JUKOGYO KABUSHIKI KAISHA, Tokyo (JP)
(72) Inventor: Kato, Tetuya, Fuji Jukogyo Kabushiki Kaisha, Tokyo (JP)
(74) Representative: W.P. Thompson & Co.

(57) **Abstract**

When a preceding vehicle in a driving lane is adequately caught in sight, a target vehicle speed is calculated by a calculated value based on an adequate vehicle-to-vehicle distance to the preceding vehicle, and it is checked whether or not a gradient for determining whether the road on which the vehicle is running on a downhill road or an uphill road should be performed. If it is determined that the road is a downhill road or an uphill road, the target vehicle speed is corrected according to the gradient. The indicated vehicle speed and the actual speed are adequately adjusted according to the road gradient, and an adequate vehicle-to-vehicle distance to the preceding vehicle is maintained to realize a consistent follow running.

## Description

### BACKGROUND OF THE INVENTION

### 1. Field of the Invention

The present invention relates to a vehicle active drive assist system for performing a control to follow a preceding vehicle in a driving lane.

### 2. Description of the Related Art

Recently, vehicle active drive assist systems that perform a running control of a vehicle based on outside circumstances in front of the vehicle, which is recognized by using a millimeter-wave radar, an infrared-laser radar, a stereo camera (or a binocular), a monocular camera, or the like, have been developed and put into practical use. In these kinds of vehicle active drive assist systems, the most common type has included a vehicle-to-vehicle distance cruise control (ACC: Adaptive Cruise Control) function to perform a constant speed running control and a follow-running control with respect to the preceding vehicle according to recognition results of the preceding vehicle.

In this kind of vehicle active drive assist system, a recognition capacity of the preceding vehicle or the like can be degraded by such factors as rain, snow, fog, a bright background, and darkness. To cope with this, for example, Japanese Unexamined Patent Application Publication No. 6-230115 discloses a technology in which the vehicle-to-vehicle distance to the preceding vehicle or the like is detected by processing images obtained by the stereo camera, the vehicle-to-vehicle distance to the preceding vehicle or the like is detected from the data obtained by the millimeter-wave radar, the reliability of the stereo camera and the millimeter-wave radar is determined on the basis of external circumstances or the like, and either of the vehicle-to-vehicle distance obtained by the image processing or the vehicle-to-vehicle distance obtained by processing the data from the millimeter-wave radar based on the determined reliability is selectively used.

However, in the technology disclosed in the above Patent Reference, the influence of road gradients of the road is not considered, and when the vehicle approaches a downhill or an uphill road during the follow-running with respect to the preceding vehicle, an acceleration/deceleration responsiveness of the vehicle becomes too sensitive or insensitive, the vehicle approaches too close to or retreats too far from the preceding vehicle, and an adequate vehicle-to-vehicle distance can hardly be maintained.

### SUMMARY OF THE INVENTION

Accordingly, it is an object of the present invention to provide a vehicle active drive assist system capable of eliminating an effect of a change in an acceleration/deceleration responsiveness of a vehicle due to road gradients, and performing a following run for maintaining an adequate vehicle-to-vehicle distance to a preceding vehicle.

The vehicle active drive assist system of the present invention comprises a detecting unit to detect a preceding vehicle in a driving lane, a calculating unit to calculate a target vehicle speed of the vehicle based on the vehicle-to-vehicle distance to the preceding vehicle, a deciding unit to determine a road gradient of a road based on an information about driving modes of the vehicle, and an adjusting unit to correct the target vehicle speed according to the road gradient.

By way of example only, a specific embodiment of the present invention will now be described with reference to the accompanying drawings, in which:
Fig. 1 is a schematic configuration of a vehicle with an active drive assist system installed therein according to the present invention;
Fig. 2 is a block diagram of an entire vehicle active drive assist system;
Fig. 3 is the block diagram of a cruise control function thereof;
Fig. 4 is a flowchart of a target vehicle speed calculation routine; and
Fig. 5 is an explanatory diagram to indicate a relationship between a road gradient and a target vehicle speed.

### DESCRIPTION OF THE PREFERRED EMBODIMENTS

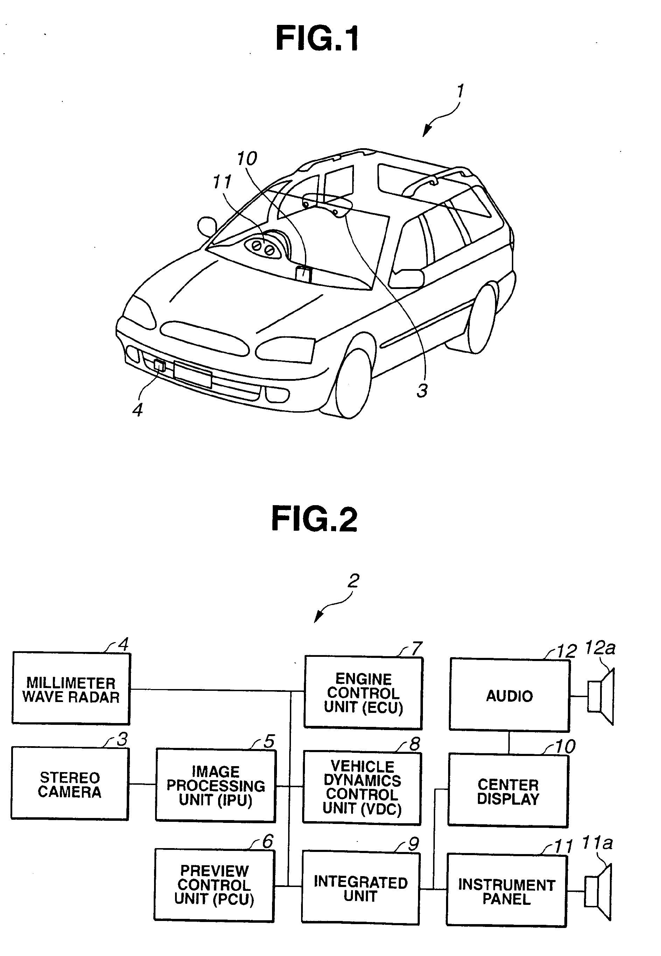

In Fig. 1, reference numeral 1 denotes a vehicle (an own vehicle) such as an automobile, and an active drive assist system (ADA: Active Drive Assist system) 2 is installed in the vehicle 1. As shown in Fig. 2, the active drive assist system 2 comprises a stereo camera unit 3, a millimeter-wave radar unit 4, an image processing unit (IPU) 5, a preview control unit (PCU) 6, an engine control unit (ECU) 7, a vehicle dynamics control unit (VDC) 8, and an integrated unit 9, which are connected to each other via a multiplex communication system such as CAN (Controller Area Network). In addition, a center display 10, an instrument panel 11, and an audio device 12 are connected to the integrated unit 9 via another communication system (an on-board communication system) using a different communication speed.

The stereo camera unit 3 has a pair of (right and left) CCD cameras using solid-state image pickup devices such as charge coupled devices (CCDs). These right and left CCD cameras are fixed to a forward part of a ceiling in a cabin with a space of a predetermined reference length therebetween (see Fig. 1), and pick up images of an object outside the vehicle from different viewpoints. The stereo camera unit 3 performs A/D conversion of each image (a reference image and a comparative image) picked up by the right and left CCD cameras, and various kinds of corrections, and outputs these image signals to the IPU 5.

The millimeter-wave radar unit 4 is fixed to, for example, a front bumper member of the vehicle 1 (see Fig. 1). The millimeter-wave radar unit 4 has a transmitter-receiver (not shown) which transmits and receives millimeter-waves at predetermined time intervals in a predetermined scanning range in a horizontal direction of the vehicle 1. The millimeter-wave radar unit 4 generates a millimeter-wave radar image consisting of two-dimensional distribution information of a three-dimensional object ahead of the vehicle based on the time difference until the transmitted millimeter-waves are reflected by a reflective object, such as the three-dimensional object, and returned, and outputs the image to the IPU 5.

Each of image signals from the stereo camera unit 3 and the millimeter-wave radar unit 4 is processed by the IPU 5, and outside circumstances are thus recognized. In other words, the IPU 5 performs a three-dimensional object recognition based on the stereo image, the three-dimensional object recognition based on the radar image, and the three-dimensional object recognition by fusing the three-dimensional object recognized based on the stereo image (hereinafter, referred to as "the image three-dimensional object") and the three-dimensional object recognized based on the radar image (hereinafter, referred to as "the radar three-dimensional object").

More specifically, in the three-dimensional object recognition based on the stereo image, three-dimensional objects such as white lines on the road, side walls of guard rails, curbs or the like present along the road, and vehicles are recognized by a known operation process using the principle of triangulation of the stereo image or the like. A different ID is allocated to each piece of data related to the recognized white lines, the side walls and the three-dimensional objects. Under these conditions, two or more surfaces of the three-dimensional objects such as the vehicles are often recognized continuously by means of corners formed by these surfaces, and three-dimensional objects having a high likelihood of being such vehicles are registered separately as corner-shaped three-dimensional objects. In addition, in the three-dimensional object recognition based on the radar image, portions with continuous distance values on the radar image are extracted as one three-dimensional object, and an ID is allocated to each piece of data related to the extracted three-dimensional object.

Next, an identical probability for every combination of each image three-dimensional object with each radar three-dimensional object is determined based on the position and the moving speed of each image three-dimensional object and each radar three-dimensional object, and each combination of the image three-dimensional objects with the radar three-dimensional objects for which the identical probability is equal to or larger than a predetermined value and which has the highest coincidence with each other is recognized as a three-dimensional object (a fusion three-dimensional object) using both the stereo image and the millimeter-wave radar. As a result, each three-dimensional object comprising the three-dimensional object recognized as a single image three-dimensional object, the three-dimensional object recognized as a single radar three-dimensional object, or a fusion three-dimensional object recognized by the combination of the single image three-dimensional object and the single radar three-dimensional object is recognized ahead of the vehicle.

In addition, the vehicle driving lane is estimated on the basis of the information on the white lines, the side walls or the like recognized from the stereo image and the information on the running conditions of the vehicle 1 obtained from the VDC 8, and a three-dimensional object existing in the estimated vehicle driving lane is extracted. If three-dimensional objects in the vehicle driving lane are extracted, the three-dimensional object that is located closest to the vehicle among those objects is acquired as a preceding vehicle.

The above-described recognition result of the outside circumstances by the IPU 5 is input to the PCU 6 to control each function of the active drive assist system 2. The PCU 6 performs various kinds of active drive assist functions based on the information obtained from the IPU 5 and the VDC 8, and adequately outputs display signals to the center display 10 and the instrument panel 11, outputs buzzer (or audio) signals to the speakers 11a and 12a connected to the instrument panel 11 and the audio device 12, or outputs control signals to the ECU 7 and the VDC 8.

As described above, the active drive assist function carried out by the PCU 6 includes, for example, an alarm function for the vehicle-to-vehicle distance, lane deviations, and lane deviations (meandering) swaying, tire-grip estimating functions, and visibility assist functions, and further includes the vehicle-to-vehicle distance cruise control (Adaptive Cruise Control: ACC) function for performing a constant speed running control and follow-running control with respect to the preceding vehicle according to the recognition result of the preceding vehicle.
(a) Vehicle-to-vehicle distance alarm function
   When the preceding vehicle in the vehicle driving lane is acquired, the vehicle-to-vehicle distance to the preceding vehicle is monitored, and when the vehicle-to-vehicle distance becomes less than or equal to a predetermined alarm vehicle-to-vehicle distance, a warning lamp of the instrument panel 11 is lit, and an alarm is output from the speaker 11a by generating a buzzer sound.
(b) Lane deviation alarm function
   If it is determined from the positional relationship between a white line of the vehicle driving lane and the vehicle 1 that the spacing between the white line and an extension of one of the outer sides of the vehicle 1 is approximately "zero" within a preset forward distance, a warning lamp of the instrument panel 11 is lit, and an alarm is output by generating a buzzer sound from the speaker 11a.
(c) Sway alarm function
   Swaying of the vehicle in the driving lane is measured on the basis of the relationship between the vehicle 1 and the white lines, and a sway caused by inattentive driving or by dozing is detected from the frequency analysis thereof: a lane deviation alarm has a priority, and is given in an earlier stage. In addition, when lane deviation is detected, an audio alarm is output from the speaker 12a.
(d) Tire-grip estimation function
   If there is a wheel speed difference between the front and rear wheels when the driver steps on the brake pedal, and the detected value exceeds a predetermined value, it is determined that tires are easily going to slip, and this fact is displayed via the center display 10.
(e) Visibility assist function
   An information on the preceding vehicle running in the vehicle driving lane and the information on the vehicle-to-vehicle distance to an opposing vehicle is displayed via the center display 10. In addition, when the vehicle is approaching the preceding vehicle at a speed greater than or equal to a predetermined value, an alarm is output from the speaker 12a by generating a buzzer sound.
(f) ACC function

When a driver sets a desired running speed by operating a touch switch provided on the center display 10, the vehicle is subjected to automatic constant speed running if no preceding vehicle is present in the vehicle driving lane, and follow-running control is performed so as to maintain an adequate vehicle-to-vehicle distance if the preceding vehicle at a lower speed than that of the vehicle is acquired in the vehicle driving lane.

The touch switch of the center display 10 is used to perform/cancel the active drive assist functions, or to switch the display of the center display 10, and the ACC function can be selected by operating a main switch to turn on and off the ACC function, a vehicle speed switch to set the target vehicle speed at the constant speed running, a coast switch for mainly changing and setting the target vehicle speed to a downhill side, a resume switch for mainly changing and setting the target vehicle speed to an uphill side, or the like.

This ACC control function is turned OFF not only in the event of a system fault when a fault is detected in each unit, but also in the event of fog or rain or degradations of the image pickup environment, such as when the image pickup against a backlight (or a bright background) is attempted, on the basis of the stereo image in the IPU 5, or when a stain on the windshield or a camera lens, a misalignment of the radar based on the millimeter-wave radar image, a stain on the radar cover, or the like is detected. Further, even when the ACC control function is turned ON, the follow running with respect to the preceding vehicle is prohibited if a possibility of mistaken recognition is determined on the basis of the information about recognition types in addition to the information on the preceding vehicle, which is described below.

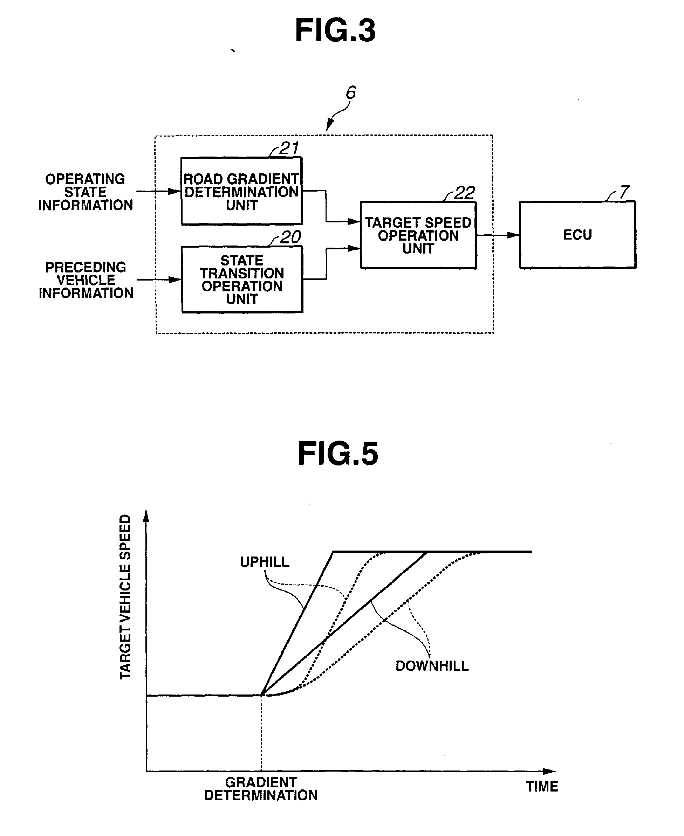

Fig. 3 shows a main configuration of the ACC control function performed by the PCU 6, mainly consisting of a mode-changing operation unit 20, a road gradient determination unit 21, and a target speed operation unit 22. In the target speed operation unit 22, the target vehicle-to-vehicle distance according to the running mode controlled by the mode-changing operation unit 20 is controlled on the basis of the information on the preceding vehicle, such as the speed and the distance of the preceding vehicle acquired by the IPU 5, and the target vehicle speed is corrected according to the gradient of the road determined by the road gradient determination unit 21 and output to the ECU 7 as a target value of the engine output control performed by the ECU 7.

In detail, the mode-changing operation unit 20 basically operates the constant speed running mode and the follow running mode. In addition, the mode-changing operation unit 20 operates the constant speed running mode and the acceleration/deceleration mode via the VDC 8. These are operated on the basis of the information on the preceding vehicle from the IPU 5. The constant speed running mode controls the vehicle speed set by the driver to maintain that speed when no preceding vehicle is present in the driving lane. The follow running mode performs the follow running in which an adequate vehicle-to-vehicle distance to the targeted preceding vehicle is maintained when the preceding vehicle is running at a lower speed than that of the vehicle in the driving lane. The constant speed running mode maintains the vehicle speed when sight of the preceding vehicle is lost during the follow running mode. The result of the mode-change of operation is updated as needed on the basis of the information on the preceding vehicle from the IPU 5.

The road gradient determination unit 21 determines the road gradient of the running lane of the vehicle by combining at least the engine output control state, the speed change state, and the braking state of the vehicle while paying attention to the change of the running condition of the vehicle corresponding to the change of the road gradient if the road changes from a flat road to a downhill road or an uphill road. More specifically, it is determined that the present road on which the vehicle is running is a downhill road, an uphill road or a flat road from the information on the running condition of the vehicle, such as the engine throttle opening degree information, the speed change of the vehicle, the braking applied or not, and the braking control performed or not.

For example, on a downhill road, the control responsiveness with respect to the target vehicle speed is higher than that on a flat road, and the throttle opening degree of the engine is controlled to be relatively small, and, depending on the acceleration of the vehicle, braking control is performed or braking is applied by the driver. On the contrary, on an uphill road, the control responsiveness to the target vehicle speed is lower than that on a flat road, the acceleration is relatively small, and the throttle opening degree of the engine is controlled to be relatively large to compensate for this.

Therefore, the road gradient of the road can be determined by learning in advance the relationship between a change in the running condition and the road gradient based on the driving characteristics and a braking capacity of the vehicle using a neural network or the like, and inputting the information on the present running condition to the neural network without providing any special sensor such as an inclination sensor. Concerning the result of determination of the road gradient by the road gradient determination unit 21, the kinds of road, that is, a flat road, a downhill road, or an uphill road, and the gradient thereof are output to the target speed operation unit 22.

The target speed operation unit 22 operates the target vehicle speed in each running mode corresponding to the mode-changing instructions from the mode-changing operation unit 20. The target vehicle speed is output to the ECU 7, the throttle opening degree is feedback-controlled via an actuator to open/close a throttle valve according to the difference between the target vehicle speed and the actual vehicle speed obtained by the ECU 7, and the vehicle speed is thus controlled. In this case, the target speed operation unit 22 corrects the target vehicle speed according to the degree of the gradient if it is determined during the follow running mode by the road gradient determination unit 21 that the road surface is not flat. Therefore, the vehicle can be prevented from approaching too close to the preceding vehicle due to an excessive response speed on a downhill road, and control hunting in deceleration and acceleration does not occur. Further, an inadequate increase of the vehicle-to-vehicle distance caused by reduction of the response speed on an uphill road can be prevented.

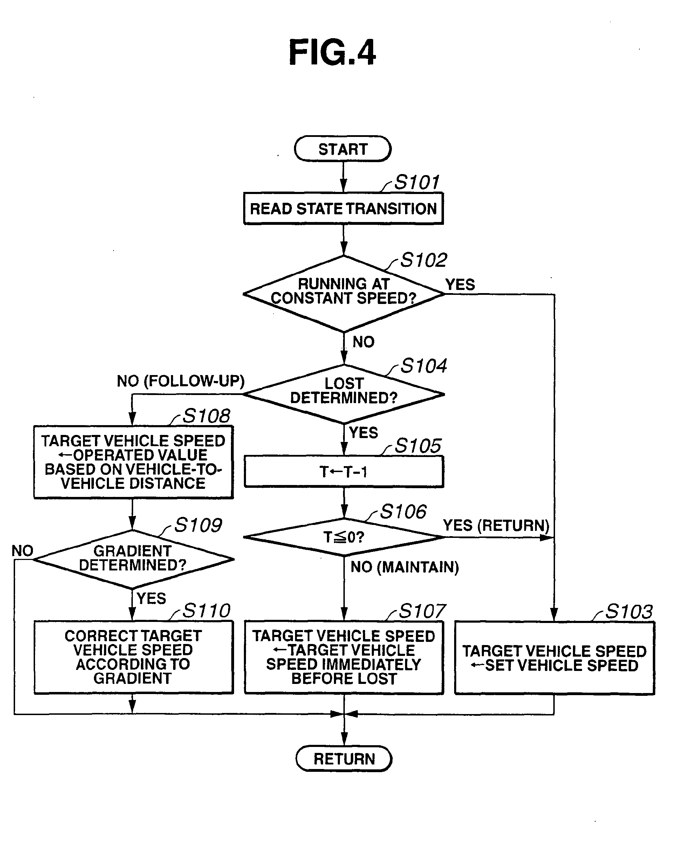

Specifically, the target vehicle speed in the above-described ACC control function is calculated by the program processing in Fig. 4. A target vehicle speed calculation routine in Fig. 4 will be described below.

This target vehicle speed calculation routine is started by turning ON an ACC main switch on the center display 10 under the ACC control executable conditions, and is repeated at predetermined intervals.

When this routine is started, first, the mode-changing operated on the basis of the information on the preceding vehicle from the IPU 5 is read in Step S101, and it is determined in Step S102 whether or not the present mode-changing is the constant speed running mode in which the preceding vehicle in the driving lane is not caught in sight. If the present mode-changing is the constant speed running mode, the program advances from Step S102 to Step S103, calculates the vehicle speed set by the driver as the target vehicle speed, and exits the routine.

In the constant speed running mode, the target vehicle speed is output from the PCU 6 to the ECU 7, and the ECU 7 performs feedback control of the opening degree of the throttle valve so that the difference between the target vehicle speed and the present vehicle speed converges to zero. In other words, when the throttle opening degree is increased, the engine speed is increased, and the vehicle speed is increased. On the other hand, when the throttle opening degree is reduced, engine braking is applied to perform a deceleration. Therefore, the vehicle 1 is automatically controlled so as to run at the constant speed set by the driver.

In addition, in Step S102, if the present mode-changing is not the constant speed running mode, the program advances from Step S102 to Step S104, and if the IPU 5 cannot have sight of the preceding vehicle because it is running on a curve, performing a lane change, or the like, it is determined whether or not the preceding vehicle is temporarily lost from sight.

As a result, if it is determined that the preceding vehicle is lost from sight, the program advances from Step S104 to Step S105, and a counter T to count the duration for which the loss continues counts down from the previous value **(T ←** T - 1). An initial value to provide a holding time for maintaining the present vehicle speed mode (for example, 2 seconds) when the preceding vehicle is lost from sight during the follow running mode is set in the counter T, and the counter counts down from the initial value immediately after the preceding vehicle is lost from sight.

In Step S106, it is checked whether or not the counter T reaches zero. If T > 0, the duration time after the preceding vehicle is lost from sight has not yet elapsed, the program advances from Step S106 to Step S107, maintains the target vehicle speed at the target vehicle speed immediately before the preceding vehicle was lost from sight, and the program then exits the routine. The present mode-changing changes from the follow running mode to the constant speed running mode.

In the constant speed running mode, the opening degree of the throttle valve is feedback-controlled according to the difference between the target vehicle speed output from the PCU 6 to the ECU 7 and the present vehicle speed, and this control is maintained so that the vehicle speed is equal to the target vehicle speed when the preceding vehicle cannot be caught in sight. In other words, even if the preceding vehicle cannot be caught in sight during the follow running, the present vehicle speed mode is maintained without immediately performing the acceleration, and a buffer zone for the control is provided, preventing the driver from feeling any incompatibility.

Thereafter, the routine is repeated, and when T ≤ 0 in Step S106, and the lost state of the preceding vehicle elapses the speed-maintaining time, it is determined that the preceding vehicle is not temporarily lost, but n preceding vehicle is present in the driving lane (the preceding vehicle is absent), the program exits from Step S106 to Step S103, and the acceleration is immediately started by setting the target vehicle speed to be the set vehicle speed. If the target vehicle speed changes, the preceding vehicle being found again, the mode-changing changes to the constant speed running mode, and the vehicle speed is rapidly returned to the set vehicle speed without the driver experiencing any sense of hesitation (feeling of defective acceleration).

On the other hand, in Step S104, if it is not determined that the preceding vehicle is lost, and the preceding vehicle in the driving lane is adequately acquired, the program advances from Step S104 to Step S108, and calculates the target vehicle speed using the controlled value based on an adequate vehicle-to-vehicle distance to the preceding vehicle. For example, a target value of the vehicle-to-vehicle distance to an object to be followed is obtained by multiplying the vehicle speed by the set time, the controlled value according to the difference between the target vehicle-to-vehicle distance and the actual vehicle-to-vehicle distance and the relative speed between the vehicle and the preceding vehicle is added to the speed of the preceding vehicle, and the target vehicle speed is thereby operated.

Under these conditions, the mode-changing is the follow running mode. In this follow running mode, the opening of the throttle valve is feedback-controlled according to the difference between the target vehicle speed output from the PCU 6 to the ECU 7 and the actual vehicle speed. The vehicle-to-vehicle distance between the vehicle and the preceding vehicle is controlled so as to be equal to the target vehicle-to-vehicle distance by performing a deceleration using an automatic brake from the PCU 6 via the VDC 8 as necessary, such as when another vehicle cuts into the running lane of the vehicle. The vehicle 1 thereby performs the follow running while maintaining an adequate vehicle-to-vehicle distance to the preceding vehicle thereby.

Next, the program advances to Step S109, and determines whether the gradient of the road on which the vehicle is presently running is a downhill road or an uphill road, not a flat road. If it is determined that the road is not inclined, that is, the road is flat, the program exits the routine without changing the target vehicle speed previously calculated in Step S108. If it is determined that the road is a downhill road, or an uphill road, the program advances to Step S110, and corrects the previously calculated target vehicle speed according to the gradient.

For example, if it is determined that the present road is a downhill road, the target vehicle speed increase rate (the difference between the target vehicle speed calculated this time and the target vehicle speed calculated previously) is checked, and the acceleration of the vehicle on the downhill road is limited by reducing the target vehicle speed calculated this time so that the target vehicle speed increase rate is not more than an upper limit value set according to the gradient. If it is determined that the road on which the vehicle is running is an uphill road, the difference between the actual vehicle speed on the uphill road and the target vehicle speed is set to be larger than that on the flat road by increasing the target vehicle speed calculated this time so that the target vehicle speed increase rate is not less than a lower limit value set according to the gradient, and any sense of hesitation due to defective accelerations is eliminated to maintain an adequate vehicle-to-vehicle distance.

The above-described change in the target vehicle speed according to the road gradient will be described with reference to Fig. 5. As shown in the figure, when the speed of the preceding vehicle increases during the follow-running, the target vehicle speed increase rate of the vehicle on a downhill road is set to be smaller than that on a flat road, or the target vehicle speed increase rate of the vehicle on an uphill road is set to be larger than that on a flat road, and as indicated by a broken line in the figure, the response delay of the actual vehicle speed to the target vehicle speed is set to be substantially constant irrespective of the gradient.

Therefore, over-sensitive or over-insensitive acceleration/deceleration responsiveness of the vehicle under the influence of the road gradient can be avoided during the follow-running, or a control hunting does not occur. By adequately adjusting the indicated vehicle speed and the actual speed according to the road gradient, an adequate vehicle-to-vehicle distance to the preceding vehicle can be maintained even on the road surface having extreme changes in gradient, such as a mountainous road, and stable follow-running can be realized thereby.

In the present embodiment, an example of having sight of the preceding vehicle by the sensor fusion of the stereo image and the radar image is described. The preceding vehicle may be caught in sight by using either of them, or the preceding vehicle may be caught in sight singularly or by a combination of the infrared-laser radar with a monocular camera.

As described above, the vehicle active drive assist system of the present invention can eliminate the influence of changes of the acceleration/deceleration responsiveness due to the road gradient, and can realize the follow-running to maintain an adequate vehicle-to-vehicle distance to the preceding vehicle.

## Claims

1. An active drive assist system, **characterized by** comprising:
searching means (5) for detecting a preceding vehicle in a driving lane;
deciding means (21) for determining the road gradient of a road based on information on a driving state of the vehicle; and
estimating means (22) for calculating a target vehicle speed of the vehicle based on a vehicle-to-vehicle distance to the preceding vehicle and for correcting the target vehicle speed according to the road gradient.

2. The active drive assist system according to Claim 1;
**characterized in that** the road gradient is determined by combining at least an engine output control state, a speed change state, and a braking state of the vehicle with each other.
